# EUROPÄISCHE PATENTSCHRIFT

(11) **EP 3 375 257 B1**
(45) Veröffentlichungstag und Bekanntmachung des Hinweises auf die Patenterteilung: **02.09.2020**
(21) Anmeldenummer: 16788663.9
(22) Anmeldetag: 26.10.2016
(51) Int. Cl.: H05B 47/19

(54) **BELEUCHTUNGSEINRICHTUNG UND VERFAHREN ZUR VERSORGUNG EINES DRAHTLOS-ÜBERTRAGUNGSMODULS**
LIGHTING DEVICE AND METHOD FOR SUPPLYING A WIRELESS TRANSMISSION MODULE
SYSTÈME D'ÉCLAIRAGE ET PROCÉDÉ D'ALIMENTATION D'UN MODULE DE TRANSMISSION SANS FIL

(30) Priorität: 13.11.2015 DE 102015119627
(43) Veröffentlichungstag der Anmeldung: 19.09.2018
(73) Patentinhaber: OSRAM GmbH, 80807 München (DE)
(72) Erfinder: PEITZ, Christoph, 59556 Lippstadt (DE)
(74) Vertreter: Hofstetter, Schurack & Partner
(86) Internationale Anmeldenummer: PCT/EP2016/075817
(87) Internationale Veröffentlichungsnummer: WO 2017/080828

(56) Entgegenhaltungen:
- CN-A- 104 121 507
- US-A1- 2013 331 038
- US-A1- 2015 256 963
- DINESH MANANDHAR ET AL: "Development of IMES Installation, Setup and Management System", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 September 2011 (2011-09-23), page 1507, XP056000521,

## Beschreibung

Die Erfindung betrifft eine Beleuchtungseinrichtung gemäß dem Oberbegriff des Patentanspruchs 1. Weiterhin betrifft die Erfindung ein System mit einer Vielzahl von derartigen Beleuchtungseinrichtungen. Überdies betrifft die Erfindung ein Verfahren zum Betreiben einer Beleuchtungseinrichtung gemäß dem Oberbegriff des Patentanspruchs 12.

Aufgrund ihrer räumlich gut verteilten Anordnung bieten sich Beleuchtungseinrichtungen dafür an, als Träger eines Übertragungsmoduls zur Bereitstellung von Daten mittels drahtloser Übertragung für vielfältige Anwendungen zu dienen. Eine gattungsgemäße Beleuchtungseinrichtung ist aus der EP 1 263 150 B1 bekannt. Überdies ist aus der EP 1 263 150 B1 ein Daten-Übertragungssystem mit einer lokalen Bake bekannt, die auf der einen Seite mit steuernden und/oder Informationen übermittelnden Infrastruktur-Einrichtungen, beispielsweise einem zentralen Diensteserver oder dem Internet, und/oder mit einer oder mehreren weiteren lokalen Baken in Kommunikationsverbindung steht und die auf der anderen Seite zur drahtlosen Kommunikationsverbindung mit einem oder mehreren, sich in ihrer Umgebung befindenden Endgeräten eine kombinierte Sende-/Empfangseinrichtung oder in besonderen Fällen nur eine reine Sendeeinrichtung enthält und die in, an oder an der Stelle einer elektrischen Beleuchtungsvorrichtung angeordnet ist. Die lokale Bake ist mit einer die drahtlos zu übertragenden Daten betreffenden, in intelligenter Weise betriebenen Speicher- und/oder Verarbeitungsfunktionalität versehen, wobei die Speicherfunktionalität der lokalen Bake darin besteht, Informationen vorzuhalten, so dass diese Informationen dann mehrfach an mit einem passenden Endgerät ausgerüstete Nutzer abgegeben werden können, ohne jedes Mal von den Infrastruktur-Einrichtungen eingeholt werden zu müssen, und dass die Verarbeitungsfunktionalität darin besteht, dass bestimmte Verarbeitungsvorgänge, die sonst in einer zentralen Verarbeitungseinheit der Infrastruktur-Einrichtungen oder im Endgerät selber ausgeführt werden, auf die lokale Bake ausgelagert werden.

Die aus dem Stand der Technik bekannte lokale Bake für ein beleuchtungsvorrichtungsgestütztes Daten-Übertragungssystem nutzt lediglich die Stromversorgung des zur Beleuchtungseinrichtung gehörenden Leuchtmittels.

Die Druckschrift US 2013/0331038 A1 beschreibt eine Lichtvorrichtung mit einem Lichtemissionsmodul und einem Positionierungs-Informationssystem. Mithilfe von Kappen an zwei Enden des Lichtemissionsmoduls kann die Lichtvorrichtung an einer Beleuchtungsvorrichtung montiert werden. Die Lichtvorrichtung beinhaltet ein lichtemittierendes Modul mit mehreren Lichtquellen. Die Lichtvorrichtung weist ein Positionsinformationsübertragungsteil auf, das zwischen einem äußersten der mehreren Lichtquellen und der entsprechenden Kappe angeordnet ist, und überträgt eine vorgegebene Positionsinformation. So können zum Beispiel Positionsinformationen zu einem Besen, der ein entsprechendes Kommunikationsendgerät aufweist, erfasst werden.

Die Druckschrift US 2015/0256963 A1 beschreibt ein Lichtsystem mit einer Kommunikationsmöglichkeit im Nahbereich. Es werden Leuchten mit Sendern beschrieben, welche Signale über verschiedene Nahbereichskommunikationsprotokolle übertragen können. Die Signale können die Leuchten eindeutig identifizieren und die Leuchte kann von verschiedenen elektronischen Geräten erkannt detektiert werden. Das elektronische Gerät kann die Leuchte identifizieren und Daten bezüglich der Position der Leuchte abrufen. Es wird eine Navigation innerhalb eines Geschäfts als Beispiel dargestellt.

Das Dokument "Development of IMES Installation, Setup and Management System" von Dinesh Manandhar, Hideyuki Torimoto, zeigt einen Technologie namens IMES zur Bereitstellung von 3D-Positionsdaten für Innenräume. Der IMES-Transmitter sendet Daten zu einer Position (Breitengrad, Längen-, Höhen- und Boden-ID) und anderen Daten aus, welche in eine Navigationsnachricht eingebettet werden. Der Empfänger entschlüsselt die Navigationsnachricht und liefert 3D-Positionsdaten. Die Installation von IMES erfordert eine Einrichtung der PRN-ID, ein Leistungslevel der Transmitter, Positionsdaten (Breite, Länge, Höhe), eine Floor-ID und andere gerätespezifische Daten. Die Druckschrift beschreibt verschiedene Tools, um IMES zu betreiben. Zu diesen Tools gehören beispielsweise "iSET, iMAP und iPMODEL".

Es ist daher Aufgabe der vorliegenden Erfindung, eine Beleuchtungseinrichtung, ein System sowie ein Verfahren bereitzustellen, welches eine verbesserte Integration eines Übertragungsmoduls zur Bereitstellung von Daten mittels drahtloser Übertragung ermöglicht.

Diese Aufgabe wird gelöst durch eine Beleuchtungseinrichtung mit den Merkmalen des Patentanspruchs 1, ein System mit den Merkmalen des Patentanspruchs 11 sowie durch ein Verfahren mit den Merkmalen des Patentanspruchs 12. Vorteilhafte Weiterbildungen der vorliegenden Erfindung sind Gegenstand der abhängigen Ansprüche.

Die Erfindung geht aus von einer Beleuchtungseinrichtung umfassend ein erstes Leuchtmittel und ein drahtloses Übertragungsmodul zur drahtlosen Übertragung und zur Bereitstellung eines Positionsbestimmungsdaten umfassenden Positionsidentifikationssignals. Die Erfindung wird weitergebildet durch ein elektronisches Betriebsgerät zum Betreiben des ersten Leuchtmittels, wobei das elektronische Betriebsgerät eingangseitig an einem elektrischen Versorgungsanschluss der Beleuchtungseinrichtung und ausgangsseitig mittels einer ersten Anschlussvorrichtung an das erste Leuchtmittel gekoppelt ist, wobei das elektronische Betriebsgerät einen Energiewandler zur Versorgung des Übertragungsmoduls mit elektrischer Energie umfasst.

Der Erfindung liegt die Erkenntnis zugrunde, dass durch die synergetische Nutzung von Komponenten innerhalb einer Beleuchtungseinrichtung redundante Funktionsbaugruppen eingespart werden können. Ein elektronisches Betriebsgerät weist üblicherweise eine Steuervorrichtung auf, deren Betriebsspannung in einem Bereich liegt, mit der auch das Übertragungsmodul betrieben werden kann. Somit lässt sich sowohl ein kostengünstigerer als auch ein kompakterer Aufbau erzielen.

Dieser Vorteil kommt besonders dann zum Tragen, wenn es sich bei der Beleuchtungseinrichtung um eine LED-Leuchte handelt, bei der das erste Leuchtmittel als LED-Modul ausgebildet ist und die LED-Leuchte somit im Vergleich zu Leuchten mit traditionellen Leuchtmitteln wie beispielsweise Glühlampen, Leuchtstofflampen oder Hochdruckgasentladungslampen wesentlich höhere Freiheitsgrade im Leuchtendesign aufweisen kann. Beispielsweise bei der Ausgestaltung als sogenannte Langfeldleuchte kann eine LED-Leuchte sehr flach ausgebildet sein. Bei der Ausgestaltung als Downlight, welche üblicherweise für den Deckeneinbau ausgelegt sind und einen runden Querschnitt aufweisen, kann eine reduzierte Einbautiefe erzielt werden.

Gemäß einer vorteilhaften Weiterbildung ist das Übertragungsmodul unmittelbar an dem ersten Leuchtmittel angeordnet, insbesondere einteilig mit diesem gebildet. So kann beispielsweise bei einem LED-Leuchtmittel vorgesehen sein, dass eine oder mehrere LED-Bauelemente auf einem LED-Trägermodul angeordnet sind. Bei dem LED-Trägermodul kann es sich beispielsweise um eine Leiterplatte (Printed Circuit Board, PCB) handeln. Leuchtdioden (Light Emitting Diodes, LED) für Beleuchtungsanwendungen werden üblicherweise in SMD-Gehäusen zur Oberflächenmontage (SMD - Surface Mount Device) auf der Leiterplatte montiert. Hierdurch kann ein kompakter Aufbau des LED-Leuchtmittels erzielt werden. Bei dem elektrischen Versorgungsanschluss kann es sich beispielsweise um einen Standard-Netzspannungsanschluss mit 230 Volt/50 Hertz handeln. Bei dem Energiewandler handelt es sich insbesondere um einen getakteten elektronischen Energiewandler, welcher üblicherweise auch als Schaltnetzteil bezeichnet wird. Bevorzugt kann hierbei vorgesehen sein, dass der Energiewandler eine galvanische Trennung zu dem speisenden Netz bereitstellt, welches an dem elektrischen Versorgungsanschluss angeschlossen ist.

Gemäß einer bevorzugten Ausführungsform weist das Betriebsgerät eine von der ersten Anschlussvorrichtung für das erste Leuchtmittel verschiedene zweite Anschlussvorrichtung für das Übertragungsmodul auf. Dadurch kann in vorteilhafter Weise eine vorkonfektionierbare Steckverbindung genutzt werden, um das Übertragungsmodul an das Betriebsgerät anzuschließen. Hierdurch wird zum einen eine universelle Verwendbarkeit der Komponenten einer Beleuchtungseinrichtung ermöglicht, insbesondere eine Austauschbarkeit, bei der mechanisch unterschiedlich ausgestaltete Komponenten über eine einheitliche elektrische Schnittstelle betrieben werden können. Des Weiteren ist eine Unabhängigkeit gegeben von speziellen Anforderungen an den Anschluss für das erste Leuchtmittel, beispielsweise im Hinblick auf die zur Verfügung gestellte Spannung an diesem Anschluss.

Gemäß einer weiteren vorteilhaften Ausführungsform ist die zweite Anschlussvorrichtung durch eine Anschlussvorrichtung für ein zweites Leuchtmittel ausgebildet, welche funktionsgleich zu der ersten Anschlussvorrichtung ausgebildet ist. Auf diese Weise kann in einer Beleuchtungseinrichtung, welche zumindest für den Betrieb eines ersten Leuchtmittels und eines zweiten Leuchtmittels ausgelegt ist, das zweite Leuchtmittel ersetzt werden durch das Übertragungsmodul, wodurch sich eine besonders einfache Integrationsmöglichkeit des Übertragungsmoduls ergibt. Eine derartige Ausgestaltung ist insbesondere für Beleuchtungseinrichtungen geeignet, bei denen mehrere Leuchtmittel parallel oder an mehreren unabhängig voneinander ansteuerbaren Kanälen des elektronischen Betriebsgeräts betrieben werden.

Es kann jedoch auch vorgesehen sein, dass bei einer Beleuchtungseinrichtung, welche lediglich für den Betrieb eines ersten Leuchtmittels ausgelegt ist, das erste Leuchtmittel durch das Übertragungsmodul ersetzt wird. Eine derartige Ausgestaltung kann sich insbesondere für Beleuchtungseinrichtungen mit geringer Leistung anbieten, die demzufolge in höherer Anzahl beispielsweise in einem Raum verteilt angeordnet werden. In diesem Fall wirkt das Fehlen eines Leuchtmittels nicht weiter störend, im Gegenzug erhält man dafür eine vereinfachte Installation innerhalb des Raums mit einer einheitlichen Verdrahtung zu einem gemeinsamen Beleuchtungssystem.

Insbesondere ergibt sich hierdurch der weitere Vorteil, dass der Ort eines Übertragungsmoduls auch nachträglich nach der Installation der Beleuchtungseinrichtungen noch ohne Probleme geändert werden kann. Hierfür ist lediglich erforderlich, dass das jeweilige Leuchtmittel der Beleuchtungseinrichtung über eine lösbare Verbindung mit dem jeweiligen elektronischen Betriebsgerät der Beleuchtungseinrichtung gekoppelt ist.

Gemäß einer weiteren vorteilhaften Ausführungsform umfasst zumindest die erste Anschlussvorrichtung eine Auslesevorrichtung, welche dazu ausgelegt ist, zumindest einen durch ein kompatibles erstes Leuchtmittel vorgebbaren Betriebswert, insbesondere einen Nennstrom, auszulesen und die mit dem Betriebswert korrelierte Größe über die Anschlussvorrichtung bereitzustellen. Eine standardisierte Schnittstelle zum Einstellen des richtigen LED-Modul-Stroms an einem Betriebsgerät, welches als LED-Weitbereichs-Treiber ausgebildet ist, ist beispielsweise unter der Bezeichnung LEDset bekannt. So kann beispielsweise vorgesehen sein, dass die Auslesevorrichtung dazu ausgelegt ist, über diese Schnittstelle Betriebsparameter eines anstelle des ersten Leuchtmittels angeschlossenen Übertragungsmoduls zu ermitteln und die benötigten Werte hinsichtlich Strom und/oder Spannung an der ersten Anschlussvorrichtung bereitzustellen. Somit ist auf besonders einfache Weise ein Austausch des ersten Leuchtmittels gegen ein Übertragungsmodul als alternative Bestückungsvariante möglich.

Das Übertragungsmodul weist eine Schnittstelle auf, mittels welcher das von dem Übertragungsmodul auszusendende Positionsidentifikationssignal hinsichtlich physikalischer Signaleigenschaften einstellbar ist. Die Schnittstelle kann zur drahtgebundenen Kommunikation oder zur drahtlosen Kommunikation ausgelegt sein. Bevorzugt ist vorgesehen, dass über die Datenschnittstelle des Übertragungsmoduls einer oder mehrerer der nachfolgenden Betriebsparameter beziehungsweise Einstellungen des Übertragungsmoduls einstellbar sind:
- Einschalten/Ausschalten des Positionsidentifikationssignals,
- Sendeintervall zwischen zwei aufeinanderfolgenden Übertragungen der Positionsbestimmungsdaten mittels des Positionsidentifikationssignals,
- Sendeleistung des Positionsidentifikationssignals,
- Rücksetzung in einen Auslieferungszustand auf Werkseinstellungen, und
- Aufrufen von Energiemanagement-Betriebsarten.

Daneben ist die Datenschnittstelle vorzugsweise dazu ausgelegt, den Sendeinhalt zumindest umfassend die Positionsbestimmungsdaten an das Übertragungsmodul zu übermitteln, wobei hier Zuordnungsinformationen und/oder direkt die Montageposition der Beleuchtungseinrichtung bereitgestellt werden können, sowie weitere Inhalte für Empfängersysteme mit Anschluss an eine Datenverarbeitung.

Daneben kann auch vorgesehen sein, für eine Verschlüsselung der durch das Übertragungsmodul zu übertragenden Positionsbestimmungsdaten einen Schlüssel über die Datenschnittstelle bereitzustellen. Über die Datenschnittstelle können einer oder mehrere der vorgenannten Einstell-/Betriebsparameter von einem übergeordneten Datennetzwerk, beispielsweise einem Licht- oder Gebäudemanagementsystem, bereitgestellt werden.

Gemäß einer vorteilhaften Weiterbildung ist das Betriebsgerät dazu ausgelegt, die Schnittstelle des Übertragungsmoduls über die zweite Anschlussvorrichtung anzusteuern. Somit kann vorgesehen sein, dass die Datenschnittstelle und die Energieschnittstelle integriert in einer einzigen Anschlussvorrichtung, beispielsweise ausgebildet durch eine mehrpolige Steckverbindung, ausgebildet sind. In einer vorteilhaften Weiterbildung ist die Schnittstelle als Zweidrahtschnittstelle ausgebildet, insbesondere als kombinierte Energie-/Datenschnittstelle.

Beispielsweise kann vorgesehen sein, eine elektrische Verbindung zwischen dem Übertragungsmodul und dem elektronischen Betriebsgerät mittels vier Leitungen auszubilden, nämlich eine Bezugsleitung, eine Versorgungsleitung, eine Empfangsleitung und eine Sendeleitung, wodurch ein Vollduplexbetrieb ermöglicht wird.

Des Weiteren kann vorgesehen sein, dass die elektrische Verbindung zwischen dem Übertragungsmodul und dem elektronischen Betriebsgerät mittels drei Leitungen realisiert ist, nämlich einer Bezugsleitung, einer Versorgungsleitung und einer gemeinsamen Sende- und Empfangsleitung, wodurch ein Halbduplexbetrieb ermöglicht wird.

Insbesondere bei einem geringen Datenaufkommen, wenn also nur einzelne Betriebs-/Einstellparameter zu ändern sind, wobei vergleichsweise niedrige Anforderungen an die Datenübertragungsrate gestellt werden, beispielsweise 1,2 bis 9,6 Kilobit pro Sekunde, kann in besonders vorteilhafter Weise die Energieversorgung und die Datenübertragung über dasselbe Leitungspaar erfolgen. Eine derartige Form der Datenübertragung im Halbduplexbetrieb ist beispielsweise aus dem DALI-Standard bekannt, welcher zur Lichtsteuerung eingesetzt wird.

Gemäß einer vorteilhaften Weiterbildung ist das Betriebsgerät dazu ausgelegt, in Abhängigkeit von einem an einer Steuerschnittstelle des Betriebsgeräts bereitstellbaren Signal eines übergeordneten Lichtsteuersystems, wobei dieses Signal Einstellparameter für das Übertragungsmodul umfasst, die Einstellparameter über die Schnittstelle an das Übertragungsmodul zu übertragen. Hierbei sind Ausführungsformen denkbar, in denen das Betriebsgerät dazu ausgelegt ist, die von dem übergeordneten Lichtsteuersystem gemäß einem ersten Datenprotokollformat erhaltenen Daten in ein zweites Datenprotokollformat umzusetzen und konform zu dem zweiten Datenprotokollformat an das Übertragungsmodul zu übertragen. Alternativ kann vorgesehen sein, dass das Übertragungsmodul selbst das gleiche Protokollformat wie das übergeordnete Lichtsteuersystem unterstützt, sodass die von dem übergeordneten Lichtsteuersystem bereitgestellten Daten, welche für das Übertragungsmodul bestimmt sind, von dem Betriebsgerät direkt an das Übertragungsmodul weitergereicht werden. Insbesondere kann vorgesehen sein, dass das Übertragungsmodul eine eigene Adresse oder eine Sub-Adresse aufweist, sodass das Betriebsgerät alle empfangenen Daten von dem übergeordneten Lichtsteuersystem auch parallel an das Übertragungsmodul bereitstellen kann, welches in der Lage ist, die für das Übertragungsmodul bestimmten Daten selbsttätig zu ermitteln. Dadurch kann eine besonders einfache Steuerung des Datenflusses von dem übergeordneten Lichtsteuersystem erfolgen.

Die Beleuchtungseinrichtung weist einen Umgebungssensor auf, wobei das Betriebsgerät dazu ausgelegt ist, zumindest eine physikalische Signaleigenschaft des von dem Übertragungsmodul auszusendenden Positionsidentifikationssignals in Abhängigkeit von einem mittels des Umgebungssensors ermittelten Umgebungsparameter einzustellen. Bei dem Umgebungssensor kann es sich besonders bevorzugt um eine Kamera handeln. Darüber können beispielsweise eine Höhe eines Raums, in dem die Beleuchtungseinrichtung montiert ist, ermittelt oder zumindest näherungsweise anhand von bekannten Gegenständen wie beispielsweise anhand eines Stuhls geschätzt werden. Ebenso ist es möglich, Hindernisse zu erfassen, beispielsweise Schränke oder Regale. Indem die physikalischen Signaleigenschaften einstellbar sind, können diese im Hinblick auf die konkrete Einbausituation optimiert werden. So kann beispielsweise eine Sendeleistung reduziert werden, um störende Reflexionen an einem Regal zu vermeiden.

Ebenso kann vorgesehen sein, in Abhängigkeit von der ermittelten Umgebung die Abstrahlcharakteristik des Übertragungsmoduls, also insbesondere eine Ausrichtung und einen Öffnungswinkel eines Sendekegels, einzustellen. In diesem Zusammenhang wird verwiesen auf die parallele Patentanmeldung mit gleichem Anmeldetag, internes Aktenzeichen 2015P01318 DE mit dem Titel "Beleuchtungseinrichtung mit gerichtetem Funksignal zur Positionsidentifikation", wonach eine Sendeeinheit der Beleuchtungseinrichtung dazu ausgelegt ist, ein Positionsidentifikationssignal in Form eines gerichteten Funksignals mit einer vorgebbaren Abstrahlcharakteristik zu senden, wobei insbesondere ein für die Abstrahlung des Positionsidentifikationssignals wirksames Antennenelement hinsichtlich einer Abstrahlrichtung in Bezug auf die Beleuchtungseinrichtung und/oder hinsichtlich eines Öffnungswinkels eines Abstrahlkegels verstellbar ist.

Gemäß einer weiteren vorteilhaften Ausführungsform ist das Übertragungsmodul dazu ausgelegt, zumindest in einer Kalibrierbetriebsart des Übertragungsmoduls bidirektional mit einer außerhalb der Beleuchtungseinrichtung bereitstellbaren Steuereinheit zu kommunizieren. Die Kalibrierbetriebsart kann zusätzlich oder alternativ zu der bestimmungsgemäßen Betriebsart vorliegen. Beispielsweise kann eine Kalibrierbetriebsart gestartet werden, wenn die Beleuchtungseinrichtung in Betrieb gesetzt wird, also mit dem Einschalten einer zugehörigen Energieversorgung. Die Kalibrierbetriebsart kann in diesem Fall für eine vorgebbare Zeitdauer aktiviert bleiben. Ebenso kann vorgesehen sein, dass eine Kalibrierbetriebsart über das elektronische Betriebsgerät gesteuert wird. Ebenso kann eine Kalibrierbetriebsart auch durch einen Umgebungssensor der Beleuchtungseinrichtung initiiert werden, beispielsweise einen Radarsensor, einen Ultraschallsensor oder einen laserbasierten Abstandssensor.

Bei der außerhalb der Beleuchtungseinrichtung bereitstellbaren Steuereinheit kann es sich beispielsweise um ein mobiles Endgerät, insbesondere ein Smartphone, einen Tablet-PC oder ein Notebook/Laptop handeln. Bei der außerhalb der Beleuchtungseinrichtung bereitstellbaren Steuereinheit kann es sich jedoch auch um ein Licht-/Gebäudemanagementsystem handeln, welches mit dem Übertragungsmodul beispielsweise über einen drahtgebundenen Kommunikationskanal Daten austauschen kann.

Zusätzlich kann vorgesehen sein, dass das Betriebsgerät dazu ausgelegt ist, die Positionsbestimmungsdaten zusätzlich mittels des Leuchtmittels über lichtbasierte Kommunikation auszugeben. Besonders bevorzugt ist hierbei eine unabhängige Aktivierbarkeit der lichtbasierten Kommunikation und der funkbasierten Kommunikation vorgesehen. Auf diese Weise kann beispielsweise zentral die Genauigkeit einer Ortung beeinflusst werden, sodass eine Genauigkeit gegebenenfalls verbessert oder sogar reduziert werden kann.

Gemäß einer weiteren vorteilhaften Ausführungsform umfasst das erste Leuchtmittel zumindest ein LED-Modul, wobei das Übertragungsmodul zur Versorgung mit elektrischer Energie parallel an zumindest eine LED des LED-Moduls, insbesondere an genau eine LED des LED-Moduls, gekoppelt ist. Hierdurch kann das Übertragungsmodul aus einer Spannung gespeist werden, welche an der zumindest einen LED beim Betreiben der LED abfällt. Der Energiewandler dient in diesem Fall sowohl der Versorgung des LED-Moduls als auch des Übertragungsmoduls mit elektrischer Energie.

Bevorzugt umfasst ein System zur Bereitstellung einer Positionsangabe eine Vielzahl von erfindungsgemäßen Beleuchtungseinrichtungen, wobei die Positionsbestimmungsdaten der Beleuchtungseinrichtungen jeweils eine innerhalb des Systems einmalige Identifikationsnummer umfassen, sowie mit einer Datenspeichereinheit einschließlich einer Benutzerschnittstelle, wobei in der Datenspeichereinheit für jede Beleuchtungseinrichtung des Systems der Einbauort der jeweiligen Beleuchtungseinrichtung als Funktion der jeweiligen Identifikationsnummer gespeichert ist, wobei die Datenspeichereinheit dazu ausgelegt ist, in Abhängigkeit von der jeweiligen Identifikationsnummer, welche über die Benutzerschnittstelle empfangbar ist, die Positionsangabe über die Benutzerschnittstelle auszugeben. Hieraus ergibt sich ein erfindungsgemäßes System.

Bei der Datenspeichereinheit kann es sich beispielsweise um einen Server handeln, welcher über die Benutzerschnittstelle beispielsweise in Form einer WLAN-Verbindung die Positionsangabe an ein mobiles Endgerät, beispielsweise ein Smartphone, bereitstellt. Alternativ kann vorgesehen sein, dass die Datenspeichereinheit in einem mobilen Endgerät implementiert ist, sodass ein Offline-Betrieb zur Positionsbestimmung ermöglicht wird, welche nicht auf eine permanente Datenverbindung mit einem Server beschränkt ist. Vielmehr kann vorgesehen sein, dass über die Installation einer entsprechenden Applikationssoftware auf dem mobilen Endgerät die Konfiguration des Beleuchtungssystems hinterlegt ist. Auf diese Weise ist auch eine Positionsermittlung an Stellen möglich, an denen kein Zugang zu einem WLAN-Netz oder einem Mobilfunknetz besteht, sodass nicht auf eine externe Datenspeichereinheit zugegriffen werden muss.

Die Erfindung geht weiterhin aus von einem Verfahren zum Betreiben einer Beleuchtungseinrichtung mit einem ersten Leuchtmittel durch Bereitstellen eines Positionsbestimmungsdaten umfassenden Positionsidentifikationssignals durch ein Übertragungsmodul. Erfindungsgemäß wird das Verfahren weitergebildet durch Betreiben des ersten Leuchtmittels durch ein elektronisches Betriebsgerät, und Versorgen des Übertragungsmoduls mit elektrischer Energie durch einen Energiewandler des elektronischen Betriebsgeräts. Das Übertragungsmodul weist eine Schnittstelle auf. Mithilfe dieser Schnittstelle wird das von dem Übertragungsmodul auszusendende Positionsidentifikationssignal hinsichtlich physikalischer Signaleigenschaften eingestellt. Ein Umgebungsparameter wird mittels eines Umgebungssensors der Beleuchtungseinrichtung ermittelt. Das Betriebsgerät stellt in Abhängigkeit von dem ermittelten Umgebungsparameter zumindest eine physikalische Signaleigenschaft des von dem Übertragungsmodul auszusendenden Positionsidentifikationssignals ein. Hierdurch ergibt sich in vorteilhafter Weise ein synergetisches Zusammenwirken beim Betreiben der Komponenten in einer Beleuchtungseinrichtung, wodurch sich Einsparungen hinsichtlich Bauvolumen und Material ergeben können und insbesondere eine verbesserte Energieeffizienz durch gemeinsame Nutzung von Komponenten. So kann beispielsweise zweckmäßig eine in dem elektronischen Betriebsgerät vorhandenen Steuervorrichtung zur Ansteuerung eines leistungselektronischen Stellglieds gemeinsam mit dem Übertragungsmodul versorgt werden, wodurch die Notwendigkeit eines zweiten Energiewandlers entfällt.

Die für die erfindungsgemäße Beleuchtungseinrichtung beschriebenen Vorteile und Merkmale sowie Ausführungsformen gelten ebenso für das erfindungsgemäße System und gleichermaßen für entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

### Es zeigen:

- Fig. 1: in vereinfachter schematischer Darstellung (Schnittseitenansicht) eine bevorzugte erste Ausführungsform einer erfindungsgemäßen Beleuchtungseinrichtung mit zwei unterschiedlichen Energieversorgungsoptionen,
- Fig. 2a: in vereinfachter schematischer Darstellung (Schnittseitenansicht) eine bevorzugte zweite Ausführungsform einer erfindungsgemäßen Beleuchtungseinrichtung,
- Fig. 2b: in vereinfachter schematischer Darstellung (Schnittseitenansicht) eine bevorzugte dritte Ausführungsform einer erfindungsgemäßen Beleuchtungseinrichtung,
- Fig. 3: in vereinfachter schematischer Darstellung (Schnittseitenansicht) eine bevorzugte vierte Ausführungsform einer erfindungsgemäßen Beleuchtungseinrichtung,
- Fig. 4: in vereinfachter schematischer Darstellung die Inbetriebnahme und Steuerung der in einer Beleuchtungsinstallation installierten Beleuchtungseinrichtungen, und
- Fig. 5: in vereinfachter schematischer Darstellung eine bevorzugte Ausführungsform eines erfindungsgemäßen Systems zur Bereitstellung einer Positionsangabe an ein mobiles Endgerät.

Batteriebetriebene Baken weisen einen hohen Wartungsaufwand auf, da hier regelmäßig die Batterien ausgetauscht werden müssen. Der Betrieb von Baken direkt an einem Versorgungsnetz, beispielsweise dem 230-Volt/50-Hertz-Wechselspannungsnetz erfordert entweder eine Vielzahl verteilter Schaltnetzteile oder bei einer Versorgung aus einem zentralen Netzgerät eine zusätzliche Leitungsinfrastruktur für die Baken. Der zusätzliche Aufwand lässt sich vermeiden, wenn Baken direkt mit Beleuchtungseinrichtungen kombiniert werden, da moderne Beleuchtungseinrichtungen ohnehin über ein elektronisches Betriebsgerät verfügen, welches permanent an dem Wechselspannungsnetz angeschlossen ist, wobei über eine Steuerschnittstelle vorgegeben wird, ob ein zugehöriges Leuchtmittel ein- oder ausgeschaltet sein soll und gegebenenfalls bei welcher Dimmstellung der Betrieb erfolgen soll.

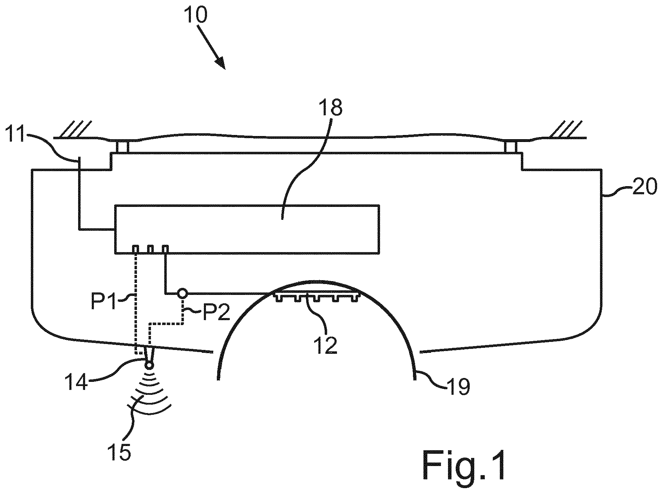

Eine bevorzugte erste Ausführungsform einer erfindungsgemäßen Beleuchtungseinrichtung in Form einer Leuchte 10 ist in der Fig. 1 dargestellt. Die Leuchte 10 umfasst einen Versorgungsanschluss 11, über den die Energiezufuhr an ein elektronisches Betriebsgerät 18 (Vorschaltgerät) zum Betreiben eines Leuchtmittels 12 erfolgt. Die Leuchte 10 weist ein Gehäuse 20 sowie einen Reflektor 19 auf. Auf der Unterseite des Gehäuses 20 ist eine Bake 14 angeordnet, welche als Übertragungsmodul zur drahtlosen Übertragung und zur Bereitstellung eines Positionsbestimmungsdaten umfassenden Funksignals 15 dient. Das verstümmelte Wort heißt angeordnet.

Zur Energieversorgung der Bake wird eine Energieschnittstelle in der Leuchte 10 realisiert. Im Vergleich zu einer batteriebetriebenen Bake (Beacon) entfallen nun die Wartungsprozesse zum Batterietausch. In der Darstellung gemäß der Fig. 1 sind zwei Varianten zur Energieversorgung der Bake 14 dargestellt.

Bei einer Versorgung über eine erste Energieversorgungsleitung P1 weist das Betriebsgerät 18 einen separaten Anschluss auf, über welchen die Bake 14 mit Energie versorgt wird. Dies hat den Vorteil, dass eine Spannung und/oder ein Strom zur Versorgung der Bake 14 unabhängig eingestellt werden kann von entsprechenden Werten, welche für das Leuchtmittel 12 bereitzustellen sind. Ein weiterer Vorteil besteht darin, dass auch bei ausgeschaltetem Leuchtmittel 12 die Bake 14 versorgt wird.

In der alternativen Ausführungsform mit einer Versorgung der Bake 14 über die zweite Energieversorgungsleitung P2 ist somit die Bake 14 an das Leuchtmittel 12 gekoppelt. Die Bake 14 kann somit über eine eigene Leitung aus dem Betriebsgerät 18 mit Energie versorgt werden. Dies kann entweder eine entsprechende Leitung zur Energieversorgung von LEDs auf dem Leuchtmittel 12 sein oder ein separater dafür vorgesehener Kanal.

Die zweite Energieversorgungsleitung P2 kann bereits an dem Betriebsgerät 18 verzweigt werden, sodass entsprechend eine doppelte Anschlussvorrichtung direkt an dem elektronischen Betriebsgerät 18 vorgesehen ist. Alternativ kann vorgesehen sein, dass das Betriebsgerät 18 lediglich einen einzigen Anschluss für das Leuchtmittel 12 und die Bake 14 aufweist, und dass die erforderliche Verzweigung durch ein Y-Kabel realisiert wird.

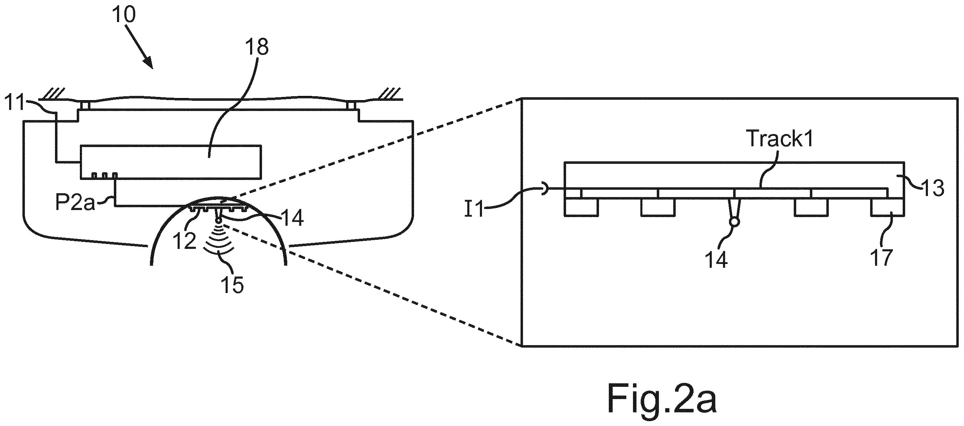

Eine bevorzugte zweite Ausführungsform mit einer Energieversorgung, welche der Energieversorgung über die zweite Energieversorgungsleitung P2, wie in der Fig. 1 dargestellt, entspricht, ist in der Fig. 2a detaillierter dargestellt. Hierbei ist das Leuchtmittel 12 mit dem Betriebsgerät 18 über eine dritte Energieversorgungsleitung P2a gekoppelt. Der Einfachheit halber ist die jeweilige Leitung nur einpolig dargestellt. Die dritte Energieversorgungsleitung P2a ist mit einem ersten Energieversorgungsanschluss I1 des Leuchtmittels 12 gekoppelt, welches vorliegend aus einem LED-Trägermodul 13 mit darauf montierten LEDs 17 sowie der Bake 14 besteht. Bei dem LED-Trägermodul 13 kann es sich insbesondere um eine Leiterplatte (Printed Circuit Board, PCB) handeln. Das Leuchtmittel 12 weist eine Leiterbahn Track1 auf, welche von dem ersten Anschluss I1 zu jeder der LEDs 17 sowie zu der Bake 14 führt. Auf diese Weise wird ein besonders einfacher Anschluss der Bake 14 an das Betriebsgerät 18 realisiert.

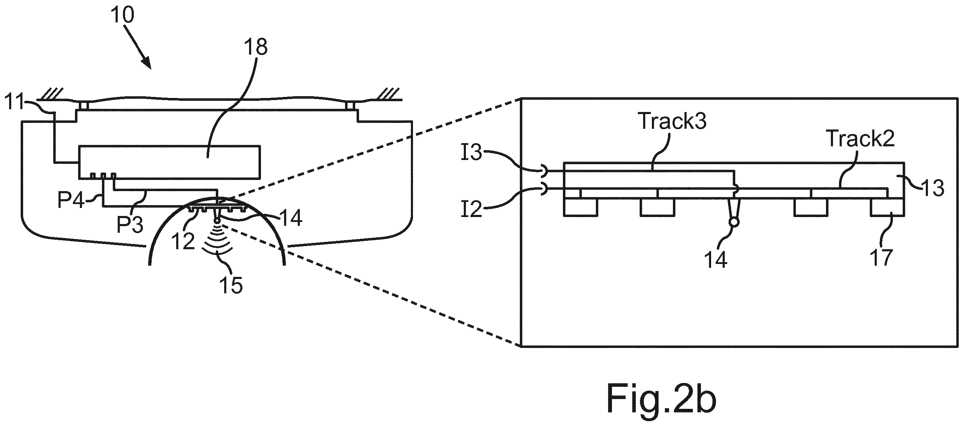

Gemäß einer zu der zweiten Ausführungsform alternativen dritten Ausführungsform gemäß der Darstellung in der Fig. 2b ist die Bake 14 wie zuvor auf dem Leuchtmittel 12 angeordnet, verfügt jedoch über einen eigenen Anschluss zur Energieversorgung. Eine dritte Energieversorgungsleitung P3 ist gekoppelt mit einem dritten Anschluss I3 des Leuchtmittels 12, von dem aus eine dritte Leiterbahn Track3 zu der Bake 14 führt. Eine vierte Versorgungsleitung P4 ist gekoppelt zwischen das Betriebsgerät 18 und einen zweiten Anschluss I2 des Leuchtmittels 12, wobei die einzelnen LEDs 17 des Leuchtmittels 12 in der dritten Ausführungsform über eine zweite Leiterbahn Track2 angeschlossen sind. Die dritte Ausführungsform weist den Vorteil auf, dass die Bake 14 auf dem Leuchtmittel 12 angeordnet ist und trotzdem unabhängig von diesem betrieben werden kann. Die Bake 14 wird dazu auf dem LED-Trägermodul 13 montiert und beispielsweise über Leiterbahnen und einem Kabel mit dem Betriebsgerät 18 (LED-Vorschaltgerät) verbunden. Die parallele Verwendung der Energieversorgung der LEDs 17, um damit gleichzeitig die Bake 14 zu versorgen, ist insbesondere bei einer permanent eingeschalteten Beleuchtungsinstallation sinnvoll. Somit kann, wie in der Fig. 2b dargestellt, für die Bake 14 ein separater Stromkreis realisiert werden mit eigenen Leiterbahnen auf dem LED-Trägermodul 13, separaten Kabeln für die beiden Einspeisungen über den zweiten Anschluss I2 und den dritten Anschluss I3 sowie einem separaten Kanal an dem Betriebsgerät 18.

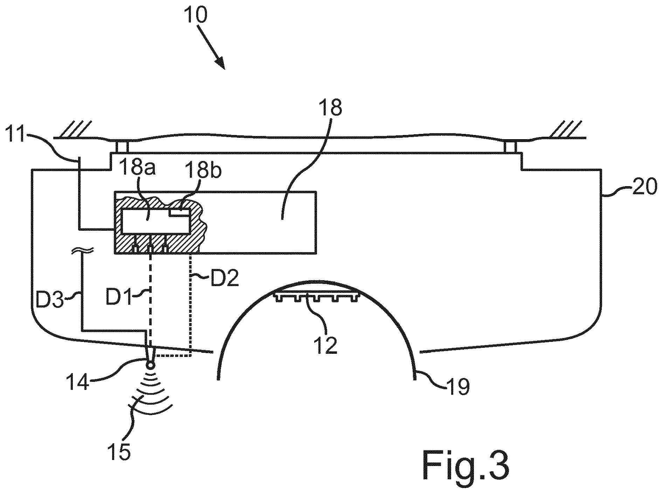

Eine bevorzugte vierte Ausführungsform ist in der Fig. 3 dargestellt. Hierbei wurde der Übersichtlichkeit halber auf die Darstellung der jeweiligen Energieschnittstellen verzichtet. Der Schwerpunkt der Darstellung liegt hier auf der Steuerung der Bake 14, welche bevorzugt auf einem der drei dargestellten Wege erfolgen kann. Das elektronische Betriebsgerät 18 weist in der vierten Ausführungsform ferner eine Steuervorrichtung 18a auf, welche optional eine Datenschnittstelle 18b für drahtlose Signalübertragung beinhalten kann.

Eine von der Bake 14 mittels des Funksignals 15 ausgesendete Identifikationsnummer ID kann mittels einer Steuerung modifiziert werden, zum Beispiel um die Identifikationsnummer ID in festen Intervallen nach einem vorgegebenen Schema anzupassen. Damit wird der Zugriff durch jegliche Fremdempfangsgeräte eingeschränkt, da nun eine dynamische Verschlüsselung der mittels des Funksignals 15 übertragenen Positionsbestimmungsdaten, insbesondere der Identifikationsnummer ID, realisiert wird. Zur Steuerung der Bake 14 kann das Steuerungssignal per Datenkabel, Powerline, WLAN, Bluetooth, Ethernet/Power oder Ethernet oder mittels ähnliche Technologien übertragen werden.

Der Steuerungssignalgeber kann hierbei das Betriebsgerät 18 selbst sein, was bei einer direkten elektrischen Verbindung miteinander zweckmäßig ist, in der Fig. 3 dargestellt durch die Steuervorrichtung 18a, welche über eine erste Datenleitung D1 mit der Bake 14 gekoppelt ist. Anstelle einer drahtgebundenen Datenverbindung kann über die Schnittstelle 18b auch eine drahtlose Datenverbindung D2 mit der Bake 14 aufgebaut werden. Eine weitere Möglichkeit bietet sich über eine dritte Datenverbindung D3, bei welcher die Bake 14 mit einer externen, separaten Steuereinheit gekoppelt ist. Hierfür sind die bereits genannten Übertragungstechnologien einsetzbar.

Zweckmäßigerweise kann hierzu vorgesehen sein, zur Einsparung eines eigenen Schnittstellenbausteins, welcher je nach Übertragungstechnologie einen nicht unerheblichen Aufwand darstellen kann, eine bereits vorhandene Schnittstelle des elektronischen Betriebsgeräts mit zu nutzen, sodass beispielsweise bestimmte Datenpakete über die erste Datenverbindung D1 von der Steuerung 18a an die Bake 14 weitergereicht werden. Dies bedeutet physikalisch eine Bereitstellung der Daten über eine lokale Schnittstelle aus dem Betriebsgerät 18, welche beispielsweise mit geringem Aufwand als I2C-Schnittselle oder als UART-Schnittstelle (Universal Asynchronous Receiver Transmitter) realisiert werden kann, welche auf vielen aktuell verfügbaren Mikrocontrollern bereits als hardwareseitig implementierte Schnittstellenbaugruppe vorliegen. Über eine derartige Datenverbindung ist insbesondere bei geringen zu übertragenden Datenmengen aufgrund der niedrigen wählbaren Datenübertragungsrate eine zuverlässige Übertragung möglich. In störungsanfälligen Umgebungen kann es jedoch vorteilhaft sein, auf ein anderes Protokoll zur seriellen Datenübertragung auszuweichen, beispielsweise mittels einer sogenannten Biphase-Codierung oder Manchester-Codierung.

Weiterhin kann vorgesehen sein, ein Sendeintervall und/oder die Signalstärke des von der Bake 14 ausgesendeten Positionsinformationssignals 15 mittels einer Steuerung einzustellen. Das Sendeintervall kennzeichnet hierbei einen Abstand zwischen zwei aufeinanderfolgenden, über das Funksignal 15 gesendeten Datenpaketen, die jeweils die Positionsbestimmungsdaten enthalten, wobei der Abstand vorzugsweise im Bereich zwischen 200 Millisekunden bis 500 Millisekunden liegt beziehungsweise eine daraus resultierende Pulsfolge eine Frequenz zwischen 5 Hertz und 2 Hertz aufweist. Diese Einstellbarkeit kann vorgesehen sein, um eine Genauigkeit der Ortung modifizieren zu können.

Zur Inbetriebnahme und zur Steuerung der Bake 14 beziehungsweise mehrerer Baken 14, welche in einer Beleuchtungsinstallation integriert sind, kann vorgesehen sein, dass ein zentrales Steuerungssystem 22 alle Beleuchtungseinrichtungen 10 beziehungsweise Baken 14 in einem installierten Beleuchtungssystem adressiert. Dann kann beispielsweise zentral die Genauigkeit der Ortung beeinflusst werden, sodass die Genauigkeit gegebenenfalls verbessert oder sogar reduziert werden kann, beispielsweise aus Gründen des Geschäftsmodells.

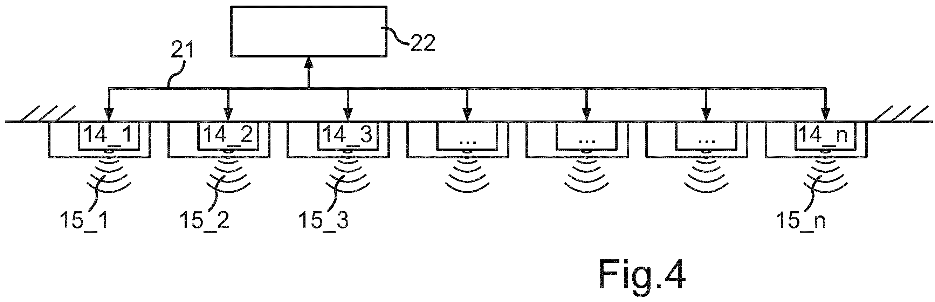

Wie in der Fig. 4 dargestellt, kann vorgesehen sein, dass das zentrale Steuerungssystem 22 über ein Kommunikationsnetzwerk 21, beispielsweise ein WLAN-Netzwerk ("WiFi") mehrere Baken 14_1, 14_2, 14_3 bis 14_n ansteuert, welche jeweils ein Funksignal 15_2, 15_3 bis 15_n aussenden. Weiterhin kann vorgesehen sein, dass die Steuerung eines Signals an die Bake 14 zudem auch in gleicher Weise eine lichtbasierte Kommunikation mittels des jeweiligen Leuchtmittels 12 der Beleuchtungseinrichtungen 10, welche an dem zentralen Steuerungssystem 22 betrieben werden, ansteuert. Dadurch kann die jeweilige Beleuchtungseinrichtung 10 zusätzlich auch eine Identifikationsnummer über das von dem Leuchtmittel 12 ausgestrahlte Licht aussenden. Überdies kann vorgesehen sein, dass die Steuerung mithilfe einer voneinander unabhängigen Aktivierung jeweils der funkbasierten und der lichtbasierten Kommunikation die Genauigkeit der von dem System bereitgestellten Positionsangaben gezielt beeinflussen kann. Üblicherweise ist eine funkbasierte Ortung deutlich ungenauer als eine lichtbasierte Ortung.

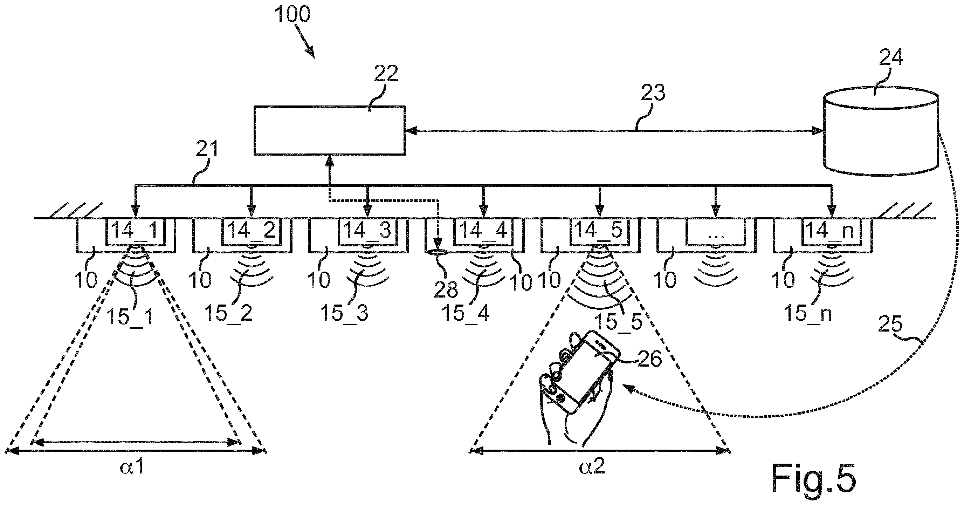

Ein bevorzugtes Ausführungsbeispiel eines erfindungsgemäßen Systems 100 zur Bereitstellung einer Positionsangabe mit einer Vielzahl von Beleuchtungseinrichtungen 10 ist in der Fig. 5 dargestellt. Dieses umfasst neben den bereits in der Fig. 4 dargestellten Komponenten einen zentralen Speicher 24, welcher über einen Datenverbindung 23 im Informationsaustausch bezüglich beispielsweise der Einstellungen und der Identifikationsnummern ID der einzelnen Baken 14 1 bis 14 n mit dem zentralen Steuerungssystem 22 steht. Der zentrale Speicher 24 stellt weiterhin eine drahtlose Datenübertragung 25 beispielsweise über WLAN bereit, mittels welcher ein Benutzer mit einem mobilen Endgerät 26 Positionsanfragen an den zentralen Speicher 24 senden kann und im Gegenzug die Positionsangabe über die drahtlose Datenübertragung 25 erhält.

Alternativ oder zusätzlich kann vorgesehen sein, dass die Positionsermittlung durch das mobile Endgerät 46 auch ohne eine bestehende Online-Verbindung zu dem zentralen Speicher 24 ermöglicht wird, indem beispielsweise vorab die relevanten Einstellungen beziehungsweise die Identifikationsnummern ID von dem zentralen Speicher 24 auf das mobile Endgerät 26 heruntergeladen werden. Auf diese Weise ist ein Offline-Betrieb ebenso möglich, was gerade in Bereichen eines Gebäudes, in dem keine Netzwerkverbindung besteht, insbesondere weder über WLAN noch über ein Mobilfunknetz, besonders vorteilhaft ist.

Weiterhin ist in der Darstellung in der Fig. 5 die Einstellbarkeit der jeweiligen Sendekegel, das heißt der Abstrahlungsbereiche der jeweiligen Positionsidentifikationssignale 15_1 bis 15_n veranschaulicht. Exemplarisch ist hier ein erster Sendekegel α1 dargestellt, welcher mit einem ersten ID-Funksignal 15_1 mit einer ersten Signalstärke x korreliert ist. Der erste Sendekegel α1 ist hierbei in vorteilhafter Weise einstellbar, um diesen auf die Verteilung der Beleuchtungseinrichtungen 10 anzupassen, sodass ein vorgebbares Überlappungsschema mit den benachbart angeordneten Baken 14 erzielt werden kann. Das mobile Endgerät 26 befindet sich gemäß der Darstellung in der Fig. 5 innerhalb eines Sendekegels α2 der Bake 14_5, welche ein ID-Funksignal 15_5 mit einer zweiten Signalstärke y bereitstellt. Wie in der grafischen Darstellung angedeutet, ist hierbei die zweite Signalstärke y größer als die erste Signalstärke x.

Das System 100 kann erweitert werden durch einen Umgebungssensor beispielsweise in Form einer Kamera 28, welche Umgebungsdaten, beispielsweise eine Höhe oder in dem Erfassungsbereich der Kamera befindliche Gegenstände, erfasst. Die Kamera 28 kann hierbei von dem zentralen Steuerungssystem 22 angesteuert werden. Das zentrale Steuerungssystem 22 erfasst die Höhe und das Umfeld des Systems 100 über die Kamera 28 oder ein anderes Sensorelement, beispielsweise einen Radarsensor, einen laserbasierten Abstandsmesssensor, einen Ultraschallsensor, und stellt nun entsprechend die Höhe der Signalstärke, beispielsweise der ersten Signalstärke x oder der zweiten Signalstärke y, selbsttätig ein.

Zudem kann auch der jeweilige Sendekegel, beispielsweise der erste Sendekegel α1 oder der zweite Sendekegel α2, angepasst werden, sodass das Funksignal 15, beispielsweise das Funksignal 15_1 oder das Funksignal 15_5, vermindert an beispielsweise Metallregalen reflektiert oder gestört wird.

Überdies kann vorgesehen sein, dass alle Einstellungen an den zentralen Speicher 24 gesendet werden, insbesondere die ausgesendeten Identifikationsnummern ID, damit diese dann wiederum einem Gerät vor Ort, beispielsweise dem mobilen Endgerät 26, zur Verfügung gestellt werden können, welches die Identifikationsnummern ID zur Ortung benötigt.

Bevorzugt kann vorgesehen sein, das System 100 dazu zu nutzen, neben der Übertragung von Positionsdaten und/oder Positionsbestimmungsdaten, insbesondere Identifikationsnummern ID der jeweiligen Beleuchtungseinrichtungen 10 beziehungsweise der zugehörigen Baken 14, weitere Daten über das aus den Baken 14 1 bis 14 n gebildete Kommunikationsnetzwerk zu verteilen, die an dem jeweiligen Ort, beispielsweise dem momentanen Aufenthaltsbereich des mobilen Endgeräts 26, benötigt werden.

Alternativ oder zusätzlich kann vorgesehen sein, über das System 100 neben den Positionsdaten weitere Daten über das genannte Kommunikationsnetzwerk zu verteilen, welche lokal an einer der Beleuchtungseinrichtungen 10 gewonnen werden, beispielsweise Kameradaten von der Kamera 28, welche in der Beleuchtungseinrichtung 10 integriert ist, welche die Bake 14_4 umfasst. In vorteilhafter Weise können somit alle Baken 14 innerhalb des Systems 100 ein Kommunikationsnetzwerk bilden, welches einen alternativen Weg zur Datenübermittlung bietet.

Die Ausführungsbeispiele dienen lediglich der Erläuterung der Erfindung und sind für diese nicht beschränkend. Insbesondere die Ankopplung zur Energieversorgung der Baken 14 an das Betriebsgerät 18 gemäß der vorhergehenden Darstellung kann mit der datentechnischen Kopplung zur Steuerung der Bake 14 beliebig kombiniert werden, ohne den Gedanken der Erfindung zu verlassen, wobei weitere Möglichkeiten für eine Bereitstellung von Steuerungsdaten vorgesehen sein können.

Somit wurde voranstehend gezeigt, wie eine (Funk-)Bake in eine Leuchte mit einer Energieversorgung und Steuerung integriert werden kann, um insbesondere den Wartungsaufwand zu minimieren.

## Patentansprüche

1. Beleuchtungseinrichtung (10) umfassend:
- ein erstes Leuchtmittel (12), und
- ein Übertragungsmodul (14) zur drahtlosen Übertragung und zur Bereitstellung eines Positionsbestimmungsdaten umfassenden Positionsidentifikationssignals (15),
- ein elektronisches Betriebsgerät (18) zum Betreiben des ersten Leuchtmittels, wobei das elektronische Betriebsgerät eingangsseitig an einen elektrischen Versorgungsanschluss (11) der Beleuchtungseinrichtung und ausgangsseitig mittels einer ersten Anschlussvorrichtung an das erste Leuchtmittel gekoppelt ist, wobei das elektronische Betriebsgerät einen Energiewandler zur Versorgung des Übertragungsmoduls mit elektrischer Energie umfasst,
**dadurch gekennzeichnet, dass**
- das Übertragungsmodul (14) eine Schnittstelle (D1, D2, D3) aufweist, mittels welcher das von dem Übertragungsmodul (14) auszusendende Positionsidentifikationssignal (15) hinsichtlich physikalischer Signaleigenschaften einstellbar ist und
- die Beleuchtungseinrichtung (10) einen Umgebungssensor (28) aufweist, wobei das Betriebsgerät (18) dazu ausgelegt ist, zumindest eine physikalische Signaleigenschaft des von dem Übertragungsmodul (14) auszusendenden Positionsidentifikationssignals in Abhängigkeit von einem mittels des Umgebungssensors (28) ermittelten Umgebungsparameter einzustellen.

2. Beleuchtungseinrichtung (10) nach Anspruch 1,
**dadurch gekennzeichnet,**
**dass** das Übertragungsmodul (14) unmittelbar an dem ersten Leuchtmittel (12) angeordnet ist, insbesondere einteilig mit diesem gebildet ist.

3. Beleuchtungseinrichtung (10) nach einem der vorherigen Ansprüche,
**dadurch gekennzeichnet,**
**dass** das Betriebsgerät (18) eine von der ersten Anschlussvorrichtung für das erste Leuchtmittel verschiedene zweite Anschlussvorrichtung für das Übertragungsmodul (14) aufweist.

4. Beleuchtungseinrichtung (10) nach Anspruch 3,
**dadurch gekennzeichnet,**
**dass** die zweite Anschlussvorrichtung durch eine Anschlussvorrichtung für ein zweites Leuchtmittel ausgebildet ist, welche funktionsgleich zu der ersten Anschlussvorrichtung ausgebildet ist.

5. Beleuchtungseinrichtung (10) nach einem der vorhergehenden Ansprüche,
**dadurch gekennzeichnet,**
**dass** zumindest die erste Anschlussvorrichtung eine Auslesevorrichtung umfasst, welche dazu ausgelegt ist, zumindest einen durch ein kompatibles erstes Leuchtmittel (12) vorgebbaren Betriebswert, insbesondere einen Nennstrom, auszulesen, und die mit dem Betriebswert korrelierte Größe über die erste Anschlussvorrichtung bereitzustellen.

6. Beleuchtungseinrichtung (10) nach Anspruch 4,
**dadurch gekennzeichnet,**
**dass** das Betriebsgerät (18) dazu ausgelegt ist, die Schnittstelle (D1, D2, D3) des Übertragungsmoduls (14) über die zweite Anschlussvorrichtung anzusteuern.

7. Beleuchtungseinrichtung (10) nach Anspruch 6,
**dadurch gekennzeichnet,**
**dass** die Schnittstelle (D1, D2, D3) als Zweidrahtschnittstelle ausgebildet ist, insbesondere als kombinierte Energie-/Datenschnittstelle.

8. Beleuchtungseinrichtung (10) nach Anspruch 6,
**dadurch gekennzeichnet,**
**dass** das Betriebsgerät (18) dazu ausgelegt ist, in Abhängigkeit von einem an einer Steuerschnittstelle des Betriebsgeräts (18) bereitstellbaren Signal eines übergeordneten Lichtsteuersystems, wobei dieses Signal Einstellparameter für das Übertragungsmodul (14) umfasst, die Einstellparameter über die Schnittstelle (D1, D2, D3) an das Übertragungsmodul (14) zu übertragen.

9. Beleuchtungseinrichtung (10) nach einem der vorhergehenden Ansprüche,
**dadurch gekennzeichnet,**
**dass** das Übertragungsmodul (14) dazu ausgelegt ist, zumindest in einer Kalibrierbetriebsart des Übertragungsmoduls eine bidirektional mit einer außerhalb der Beleuchtungseinrichtung bereitstellbaren Steuereinheit zu kommunizieren.

10. Beleuchtungseinrichtung (10) nach einem der vorhergehenden Ansprüche,
**dadurch gekennzeichnet,**
**dass** das erste Leuchtmittel (12) zumindest ein LED-Modul umfasst, wobei das Übertragungsmodul (14) zur Versorgung mit elektrischer Energie parallel an zumindest eine LED des LED-Moduls, insbesondere an genau eine LED des LED-Moduls, gekoppelt ist.

11. System (100) zur Bereitstellung einer Positionsangabe mit einer Vielzahl von Beleuchtungseinrichtungen (10) jeweils nach einem der vorhergehenden Ansprüche, wobei die Positionsbestimmungsdaten der Beleuchtungseinrichtungen jeweils eine innerhalb des Systems einmalige Identifikationsnummer umfassen, sowie mit einer Datenspeichereinheit (24) einschließlich einer Benutzerschnittstelle (25), wobei in der Datenspeichereinheit für jede Beleuchtungseinrichtung des Systems der Einbauort der jeweiligen Beleuchtungseinrichtung als Funktion der jeweiligen Identifikationsnummer gespeichert ist, wobei die Datenspeichereinheit dazu ausgelegt ist, in Abhängigkeit von der jeweiligen Identifikationsnummer, welche über die Benutzerschnittstelle empfangbar ist, die Positionsangabe über die Benutzerschnittstelle auszugeben.

12. Verfahren zum Betreiben einer Beleuchtungseinrichtung (10) mit einem ersten Leuchtmittel (12) durch:
- Bereitstellen eines Positionsbestimmungsdaten umfassenden Positionsidentifikationssignals (15) durch ein Übertragungsmodul (14),
- Betreiben des ersten Leuchtmittels durch ein elektronisches Betriebsgerät (18), und
- Versorgen des Übertragungsmoduls mit elektrischer Energie durch einen Energiewandler des elektronischen Betriebsgeräts, **dadurch gekennzeichnet, dass**
- das Übertragungsmodul (14) eine Schnittstelle (D1, D2, D3) aufweist, mittels welcher das von dem Übertragungsmodul (14) auszusendende Positionsidentifikationssignal (15) hinsichtlich physikalischer Signaleigenschaften eingestellt wird,
- ein Umgebungsparameter mittels eines Umgebungssensors (28) der Beleuchtungseinrichtung (10) ermittelt wird, und
- das Betriebsgerät (18) in Abhängigkeit von dem ermittelten Umgebungsparameter zumindest eine physikalische Signaleigenschaft des von dem Übertragungsmodul (14) auszusendenden Positionsidentifikationssignals einstellt.

## Claims

1. A lighting device (10) including:
- a first illuminant (12), and
- a transmitting module (14) for wirelessly transmitting and for providing a position identification signal (15) including position determination data,
- an electronic operating apparatus (18) for operating the first illuminant, wherein the electronic operating apparatus is coupled to an electrical supply terminal (11) of the lighting device on the input side and to the first illuminant by means of a first connecting device on the output side, wherein the electronic operating apparatus includes an energy converter for supplying the transmitting module with electrical energy,
**characterized in that**
- the transmitting module (14) comprises an interface (D1, D2, D3), by means of which the position identification signal (15) to be emitted by the transmitting module (14) is adjustable with respect to physical signal characteristics, and
- the lighting device (10) comprises an environmental sensor (28), wherein the operating apparatus (18) is configured to adjust at least one physical signal characteristic of the position identification signal to be emitted by the transmitting module (14) depending on an environmental parameter ascertained by means of the environmental sensor (28).

2. The lighting device (10) according to claim 1,
**characterized in that**
the transmitting module (14) is arranged immediately at the first illuminant (12), in particular is formed integrally with it.

3. The lighting device (10) according to any one of the preceding claims,
**characterized in that**
the operating apparatus (18) comprises a second connecting device for the transmitting module (14) different from the first connecting device for the first illuminant.

4. The lighting device (10) according to claim 3,
**characterized in that**
the second connecting device is formed by a connecting device for a second illuminant, which connecting device is formed functionally identically to the first connecting device.

5. The lighting device (10) according to any one of the preceding claims,
**characterized in that**
at least the first connecting device includes a readout device, which is configured to read out at least one operating value presettable by a compatible first illuminant (12), in particular a rated current, and to provide the quantity correlated with the operating value via the first connecting device.

6. The lighting device (10) according to claim 4,
**characterized in that**
the operating apparatus (18) is configured to control the interface (D1, D2, D3) of the transmitting module (14) via the second connecting device.

7. The lighting device (10) according to claim 6,
**characterized in that**
the interface (D1, D2, D3) is formed as a two-wire interface, in particular as a combined energy/data interface.

8. The lighting device (10) according to claim 6,
**characterized in that**
the operating apparatus (18) is configured to transmit adjusting parameters to the transmitting module (14) via the interface (D1, D2, D3) depending on a signal of a superordinate light control system capable of being provided at a control interface of the operating apparatus (18), wherein this signal includes the adjusting parameters for the transmitting module (14).

9. The lighting device (10) according to any one of the preceding claims,
**characterized in that**
the transmitting module (14) is configured to bidirectionally communicate with a control unit capable of being provided outside of the lighting device at least in a calibration operating mode of the transmitting module.

10. The lighting device (10) according to any one of the preceding claims,
**characterized in that**
the first illuminant (12) includes at least one LED module, wherein the transmitting module (14) is coupled in parallel with at least one LED of the LED module, in particular with exactly one LED of the LED module, for supply with electrical energy.

11. A system (100) for providing a position indication, comprising a plurality of lighting devices (10) each according to any one of the preceding claims, wherein the position determination data of the lighting devices each includes an identification number unique within the system, as well as comprising a data storage unit (24) including a user interface (25), wherein the installation location of the respective lighting device is stored as a function of the respective identification number in the data storage unit for each lighting device of the system, wherein the data storage unit is configured to output the position indication via the user interface depending on the respective identification number, which can be received via the user interface.

12. A method for operating a lighting device (10) with a first illuminant (12) by:
- providing a position identification signal (15) including position determination data by a transmitting module (14),
- operating the first illuminant by an electronic operating apparatus (18), and
- supplying the transmitting module with electrical energy by an energy converter of the electronic operating apparatus,
**characterized in that**
- the transmitting module (14) comprises an interface (D1, D2, D3), by means of which the position identification signal (15) to be emitted by the transmitting module (14) is adjusted with respect to physical signal characteristics,
- an environmental parameter is ascertained by means of an environmental sensor (28) of the lighting device (10), and
- the operating apparatus (18) adjusts at least one physical signal characteristic of the position identification signal to be emitted by the transmitting module (14) depending on the ascertained environmental parameter.

## Revendications

1. Dispositif d'éclairage (10), comprenant :
- une première source lumineuse (12) et
- un module de transmission (14) servant à la transmission sans fil et à la fourniture d'un signal d'identification de position (15) comprenant des données de détermination de position,
- un contrôleur électronique (18) destiné à faire fonctionner la première source lumineuse, le contrôleur électronique étant connecté du côté de l'entrée à une borne d'alimentation électrique (11) du dispositif d'éclairage et du côté de la sortie à la première source lumineuse par le biais d'un premier arrangement de raccordement, le contrôleur électronique comportant un convertisseur d'énergie destiné à alimenter le module de transmission avec de l'énergie électrique,
**caractérisé en ce que**
- le module de transmission (14) possède une interface (D1, D2, D3) au moyen de laquelle le signal d'identification de position (15) à émettre par le module de transmission (14) peut être réglé du point de vue des propriétés de signal physiques et
- le dispositif d'éclairage (10) possède un capteur d'environnement (28), le contrôleur (18) étant configuré pour régler au moins une propriété de signal physique du signal d'identification de position à émettre par le module de transmission (14) en fonction d'un paramètre d'environnement déterminé par le capteur d'environnement (28) .

2. Dispositif d'éclairage (10) selon la revendication 1, **caractérisé en ce que** le module de transmission (14) est disposé directement au niveau de la première source lumineuse (12), notamment est formé d'un seul tenant avec celle-ci.

3. Dispositif d'éclairage (10) selon l'une des revendications précédentes, **caractérisé en ce que** le contrôleur (18) possède un deuxième arrangement de raccordement pour le module de transmission (14), différent du premier arrangement de raccordement pour la première source lumineuse.

4. Dispositif d'éclairage (10) selon la revendication 3, **caractérisé en ce que** le deuxième arrangement de raccordement est formé par un arrangement de raccordement pour une deuxième source lumineuse, lequel présente une configuration fonctionnellement identique au premier arrangement de raccordement.

5. Dispositif d'éclairage (10) selon l'une des revendications précédentes, **caractérisé en ce qu'**au moins le premier arrangement de raccordement possède un arrangement de lecture qui est conçu pour lire une valeur opérationnelle, notamment un courant nominal, pouvant être prédéfinie par une première source lumineuse (12) compatible et pour fournir la grandeur corrélée avec la valeur opérationnelle par le biais du premier arrangement de raccordement.

6. Dispositif d'éclairage (10) selon la revendication 4, **caractérisé en ce que** le contrôleur (18) est conçu pour commander l'interface (D1, D2, D3) du module de transmission (14) par le biais du deuxième arrangement de raccordement.

7. Dispositif d'éclairage (10) selon la revendication 6, **caractérisé en ce que** l'interface (D1, D2, D3) est réalisée sous la forme d'une interface bifilaire, notamment sous la forme d'une interface d'énergie/de données.

8. Dispositif d'éclairage (10) selon la revendication 6, **caractérisé en ce que** le contrôleur (18) est conçu pour, en fonction d'un signal d'un système de commande de lumière de niveau supérieur qui peut être fourni à une interface de commande du contrôleur (18), ce signal comportant des paramètres de réglage pour le module de transmission (14), transmettre les paramètres de réglage au module de transmission (14) par le biais de l'interface (D1, D2, D3).

9. Dispositif d'éclairage (10) selon l'une des revendications précédentes, **caractérisé en ce que** le module de transmission (14) est conçu pour, au moins dans un mode de fonctionnement d'étalonnage du module de transmission, communiquer de manière bidirectionnelle avec une unité de commande pouvant être mise à disposition en-dehors du dispositif d'éclairage.

10. Dispositif d'éclairage (10) selon l'une des revendications précédentes, **caractérisé en ce que** la première source lumineuse (12) comporte au moins un module à LED, le module de transmission (14) étant connecté en parallèle à au moins une LED du module à LED, notamment à exactement une LED du module à LED, en vue de l'alimentation avec de l'énergie électrique.

11. Système (100) destiné à fournir une indication de position comprenant une pluralité de dispositifs d'éclairage (10), respectivement selon l'une des revendications précédentes, les données de détermination de position des dispositifs d'éclairage comprenant respectivement un numéro d'identification unique à l'intérieur du système, et comprenant également une unité de mémoire de données (24) y compris une interface utilisateur (25), le lieu d'installation du dispositif d'éclairage respectif étant enregistré dans l'unité de mémoire de données pour chaque dispositif d'éclairage du système en fonction du numéro d'identification respectif, l'unité de mémoire de données étant conçue pour délivrer l'indication de position par le biais de l'interface utilisateur en fonction du numéro d'identification respectif qui peut être reçu par le biais de l'interface utilisateur.

12. Procédé pour faire fonctionner un dispositif d'éclairage (10) comprenant une première source lumineuse (12) par :
- fourniture d'un signal d'identification de position (15) comprenant des données de détermination de position par un module de transmission (14),
- mise en fonctionnement de la première source lumineuse par un contrôleur électronique (18)
- alimentation du module de transmission avec de l'énergie électrique par un convertisseur d'énergie du contrôleur électronique,
**caractérisé en ce que**
- le module de transmission (14) possède une interface (D1, D2, D3) au moyen de laquelle le signal d'identification de position (15) à émettre par le module de transmission (14) peut être réglé du point de vue des propriétés de signal physiques
- un paramètre d'environnement est déterminé au moyen d'un capteur d'environnement (28) du dispositif d'éclairage (10), et
- le contrôleur (18) règle au moins une propriété de signal physique du signal d'identification de position à émettre par le module de transmission (14) en fonction du paramètre d'environnement déterminé.
